# EUROPÄISCHE PATENTSCHRIFT

(11) **EP 4 262 618 B1**
(45) Veröffentlichungstag und Bekanntmachung des Hinweises auf die Patenterteilung: **28.01.2026**
(21) Anmeldenummer: 21839215.7
(22) Anmeldetag: 17.12.2021
(51) Int. Cl.: A61C 8/00

(54) **AUFBAUTEIL UND MODULARES DENTALIMPLANTAT**
ABUTMENT AND MODULAR DENTAL IMPLANT
PILIER ET IMPLANT DENTAIRE MODULAIRE

(30) Priorität: 18.12.2020 EP 20215762
(43) Veröffentlichungstag der Anmeldung: 25.10.2023
(73) Patentinhaber: Institut Straumann AG, 4002 Basel (CH)
(72) Erfinder: BUURLAGE, Thorsten, 69517 Gorxheimertal (DE)
(74) Vertreter: Schaad, Balass, Menzl & Partner AG
(86) Internationale Anmeldenummer: PCT/EP2021/086633
(87) Internationale Veröffentlichungsnummer: WO 2022/129598

(56) Entgegenhaltungen:
- EP-A1- 3 187 145
- WO-A1-2008/071368
- DE-A1- 102006 011 800
- DE-A1- 102010 019 582

## Beschreibung

### Gebiet der Technik

Die Erfindung betrifft ein Aufbauteil für ein modulares Dentalimplantat, ein entsprechendes Herstellungsverfahren, einen Basiskörper für ein modulares Dentalimplantat sowie ein modulares Dentalimplantat.

### Technologischer Hintergrund

Dentalimplantate können einteilig und mehrteilig ausgestaltet sein. Allgemein haben sich mehrteilige Dentalimplantate aufgrund ihrer Vorteile gegenüber einteiligen Dentalimplantaten durchgesetzt. Mehrteilige Dentalimplantate können besser an die konkret vorgesehene Verwendung angepasst werden und bieten besseren Schutz vor unerwünschten Belastungen während des Einheilungsprozesses.

Die aus dem Stand der Technik bekannten mehrteiligen Dentalimplantate sind häufig dreiteilig aufgebaut und umfassen einen in einen Kieferknochen einzusetzenden Basiskörper, ein am Basiskörper zu befestigendes Aufbauteil und eine auf das Aufbauteil aufzusetzende Suprakonstruktion. Der auch als Implantatkörper bekannte Basiskörper soll funktional die Zahnwurzel ersetzen und ist meistens zylindrisch oder konisch geformt. In der Regel weist der Basiskörper ein Gewinde auf, über welches der Basiskörper durch Einschrauben im Kieferknochen befestigt werden kann. Das auch als Implantataufbau oder Abutment bekannte Aufbauteil dient als Zwischenglied zwischen Basiskörper und Suprakonstruktion und wird üblicherweise in den Basiskörper eingeschraubt und/oder eingeklebt. Die Suprakonstruktion stellt den eigentlichen Zahnersatz dar, in der Regel in der Form einer Krone oder Brücke, oder auch einer Prothese. Ein Dentalimplantat kann auch zwei oder mehr Basiskörper zur Verankerung einer Suprakonstruktion aufweisen, beispielsweise bei Brücken und Prothesen. Basiskörper und Aufbauteil sind in den Kiefer eingebettet beziehungsweise sind von der Suprakonstruktion abgedeckt. Die Suprakonstruktion selbst liegt im Mundraum frei.

Ein modulares Dentalimplantat ist beispielsweise aus US 2019/0223986 A1 bekannt.

In der Zahnprothetik werden vorzugsweise möglichst biokompatible und/oder bioinerte Materialien verwendet. Sehr häufig verwendet werden Titan oder Titanlegierungen, und keramische Materialien, insbesondere Zirkoniumoxid-Keramik. Insbesondere der Basiskörper eines Dentalimplantats ist vorteilhaft aus einem solchen bioinerten Material gefertigt, damit der Basiskörper dem Patienten möglichst komplikationsfrei eingesetzt werden kann und insbesondere eine Rückbildung des Zahnfleisches oder des Knochengewebes vermieden werden kann. Sowohl das Material als auch die Struktur des Basiskörpers sollen einen hohen Grad der Osseointegration und Periointegration ermöglichen. Die vorgenannten Anforderungen bzgl. hoher Biokompatibilität und Bioinertheit gelten auch für das Aufbauteil und die Suprakonstruktion.

Der Vorteil der Verwendung von Titan für Implantate, welche in den Kieferknochen eingesetzt werden, liegt in der über Jahrzehnte gut dokumentierte Biokompatibilität. Implantatkörper aus Titan belasten den Körper des Patienten möglichst geringfügig. Weiter hat das Metall Titan den Vorteil, zäh bzw. nicht spröde zu sein. Gleichzeitig hat es aber auch den Nachteil, dass es durch seine dunkelgraue Färbung als Fremdkörper in der Mundhöhle wahrgenommen werden kann. Titan wird deshalb bevorzugt für in den Kieferknochen eingesetzte Zahnimplantate verwendet, die vom Zahnfleisch bedeckt und somit in der Mundhöhle nicht sichtbar sind.

Keramikteile weisen ebenfalls eine sehr gute Biokompatibilität auf und sind damit gut körperverträglich. Der Vorteil von Keramik ist, dass die Keramik eine Färbung aufweisen kann, welche weitgehendst der natürlichen Zahnfärbung entspricht und damit weniger oder gar nicht als Fremdkörper in der Mundhöhle wahrgenommen wird. Weiter ist die Abwesenheit von Metall auch zunehmend von Interesse wegen der Vermeidung von Allergien. Keramikteile werden bevorzugt für den Zahnaufbau und anderen in der Mundhöhle sichtbare Teile wie beispielsweise Abutment, Healing Komponenten, Locater usw. eingesetzt.

Für den Langzeiterfolg eines Dentalimplantats ist weiter eine verlässliche und gegen Knochen und Zahnfleisch abgedichtete Verbindung von Aufbauteil und Basiskörper wichtig. Eine mangelhafte Verbindung zwischen Aufbauteil und Basiskörper kann zur Lockerung oder Beschädigung des Dentalimplantats führen. Undichte Verbindungen ermöglichen das Eindringen von Bakterien in das Implantat, was zu Periimplantitis führen und somit beispielsweise Kieferknochenschwund verursachen kann.

Weiter stellen die im Gebiss auftretende Kräfte hohe Anforderungen an Material und Konstruktion. So müssen Dentalimplantate sämtliche im Gebiss auftretenden, hohen Kräfte aufnehmen können, ohne zu brechen, einzureissen oder sich zu lockern.

Keramik, insbesondere Zirkonoxid, weist eine wesentlich höhere Härte auf als Titan. Keramische Teile weisen durch die üblichen Bearbeitungsmethoden an der Oberfläche feine scharfkantige Strukturen auf. Berühren sich Elemente aus Keramik und Titan, so kann durch die scharfkantigen Oberflächenstrukturen der Keramik die Oberfläche des Titans beschädigt werden. Dies gilt insbesondere, weil Dentalimplantate starken Kräften ausgesetzt sind, beispielsweise während des Kauens, und eine geringfügige Bewegung der Elemente gegeneinander nicht vermieden werden kann. Dies können insbesondere rotatorische Relativbewegungen um die Längsachse des Basiskörpers bzw. Aufbauteils sein, als auch axiale Relativbewegungen. Das Titanimplantat wird dann insbesondere durch die Kaubewegungen kontinuierlich beschädigt. Es ist deshalb bekannt, dass keramische und metallische Materialien bei einem Dentalimplantat möglichst keine Kontaktflächen bzw. Kontaktpunkte zueinander haben sollten, insbesondere wenn dabei Abrieb von den Kontaktflächen, in der Form von sehr feinen Titanspänen, in den Mundraum und damit in dem Körper des Patienten gelangen kann.

DE 102010019582 A1 offenbart ein mehrteiliges Dentalimplantat mit einem Pfostenteil und einem Aufbauteil. Die beiden Teile sind aus Metall oder Keramik gefertigt und werden mittels einer Schraube verbunden. Zum Erzielen einer leichtgängigen und funktionellen rotatorischen Selbstzentrierung der beiden Teile, welche nur durch das Anziehen der Verbindungschraube erreicht wird, wird die Reibung zwischen den Kontaktflächen reduziert durch eine Oberflächenbeschichtung von einer oder beiden Kontaktflächen. Der Einsatz von Gleitmittel und Polieren hat sich als nicht ausreichend gezeigt.

EP3187145A1 offenbart ein Dentalimplantat aus einem keramischen, insbesondere einem oxidkeramischen Werkstoff auf der Basis von Zirkoniumdioxid, ZrO 2, bzw. dessen Mischkeramiken, besteht aus einem Verankerungselement sowie aus einem in diesem mittels eines Gewindestiftes sowie einer Gewindehülse bestehenden Abutment mit angeformten Hals. Die zwischen dem Verankerungselement und dem Hals des Abutments befindliche Schicht ist als Passschliff ausgebildet und mit einer Pufferschicht aus einem silikatischen Glaslot versehen, die einen Teilbereich des Passschliffes überstreicht. Das Glaslot wird mit einem 3-D-Drucker, mittels Airbrush-Technik oder dergleichen auf zumindest eine der Flächen des Passschliffes aufgetragen und die Schicht wird anschliessend, beispielsweise mit einem Laser, verschweisst, so dass eine bakterienhemmende Abdichtung entsteht. Punktuelle Spannungen in der Keramik der beiden Grenzflächen werden durch die teilweise in die eindiffundierte silikatische Glaslotbeschichtung absorbiert.

Es besteht ein allgemeines Bedürfnis nach Verbesserungen in diesem Gebiet.

### Darstellung der Erfindung

Eine Aufgabe der Erfindung ist es, ein Aufbauteil für ein modulares Dentalimplantat zur Verfügung zu stellen, welches die oben erwähnten und andere Nachteile nicht aufweist.

Insbesondere soll ein solches Aufbauteil für ein modulares Dentalimplantat die Kombination mit einem metallischen Basiskörper zu einem modularen Dentalimplantat ermöglichen.

Ein solches modulares Dentalimplantat soll zuverlässig, langlebig und gut verträglich sein.

Diese und andere Aufgaben werden gelöst durch ein erfindungsgemässes Aufbauteil für ein modulares Dentalimplantatund ein erfindungsgemässes modulares Dentalimplantat, sowie ein erfindungsgemässes Herstellungsverfahren, gemäss den unabhängigen Ansprüchen. Weitere vorteilhafte Ausführungsformen gehen aus den abhängigen Ansprüchen und der Beschreibung hervor.

Die erfindungsgemässe Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Ein erster Aspekt der Erfindung betrifft ein Aufbauteil für ein modulares Dentalimplantat.

Bei einem Aufbauteil für ein modulares Dentalimplantat, wobei das modulare Dentalimplantat umfasst: einen in einem Kieferknochen verankerbaren Basiskörper, der aus einem für Implantate geeigneten metallischen Werkstoff gefertigt ist; und das Aufbauteil, das dazu vorgesehen ist, mit dem Basiskörper des modularen Dentalimplantats verbindbar zu sein, ist das Aufbauteil aus einem für Implantate geeigneten keramischem Werkstoff gefertigt. Die Oberfläche ist in einem Kontaktbereich des Aufbauteils dafür vorgesehen, in einem zusammengebauten Zustand des modularen Dentalimplantates eine Oberfläche in einem Kontaktbereichs eines Basiskörpers zu berühren, beziehungsweise auf der Oberfläche in dem Kontaktbereich des Basiskörpers aufzuliegen. Die Oberfläche des Aufbauteils in dem genannten Kontaktbereich des Aufbauteils ist derart bearbeitet, dass die Oberfläche einen Mittenrauwert Ra aufweist, welcher im operativen Betrieb des modularen Dentalimplantats eine Beschädigung der Oberfläche des Basiskörpers in dem genannten Kontaktbereich des Basiskörpers durch das Aufbauteil, insbesondere einen zerspanenden Materialabtrag, verhindert. Im Kontaktbereich ist der Mittenrauwert Ra der Oberfläche des Aufbauteils ≤ 0.08 Mikrometer, vorteilhaft ≤ 0.04 Mikrometer, und besonders vorteilhaft ≤ 0.02 Mikrometer.

Eine grosse Kontaktfläche zwischen Basiskörper und Aufbauteil eines modularen Dentalimplantats ist vorteilhaft, denn sie führt zu einer höheren Haftreibung zwischen den beiden Elementen und gleichzeitig zu einer geringeren Flächenpressung. Dies führt zu einer grösseren Stabilität des zusammengebauten Dentalimplantats. Eine grosse Kontaktfläche führt zudem bei gleicher wirkender Kraft zu einem kleineren Anpressdruck. Damit kommt es bei den während der Benutzung des Dentalimplantats auftretenden Relativbewegungen des Basiskörpers und Aufbauteils zu geringeren Scherkräften, was ebenfalls den unerwünschten mechanischen Materialabtrag reduziert. Die Kontaktfläche zwischen Basiskörper und Aufbauteil sollte jedoch auch nicht zu gross sein, da eine kleinere Kontaktfläche bei gleich wirkender Kraft zu einem höheren Anpressdruck führt. Durch einen höheren Anpressdruck wird eine bakteriendichte Abgrenzung zwischen der Mundhöhle des Patienten und einem Innenraum des Implantates erreicht. Der Anpressdruck sollte deshalb mindestens so gross sein, dass eine bakteriendichte Abdichtung sichergestellt ist.

Ein erfindungsgemässes Aufbauteil besteht vorteilhaft aus Zirkonoxid, insbesondere aus Yttrium-stabilisiertem Zirkonoxid.

Solche vorteilhaften Aufbauteile ermöglichen es, zwei vorteilhafte Materialien, nämlich den metallischen Werkstoff, insbesondere Titan, eines Basiskörpers und das keramische Material, insbesondere Zirkonoxid, eines Aufbauteils in Kombination für ein modulares Dentalimplantat zu nutzen, ohne dass bei direktem Kontakt die aus dem Stand der Technik bekannten Probleme auftreten. Durch die erfindungsgemässe titanfreundliche Ausgestaltung der Keramikoberfläche des Aufbauteils im Kontaktbereich zerfrisst das wesentlich härtere keramische Material des Aufbauteils nicht die Metalloberfläche des Basiskörpers. Dies kann erreicht werden durch ein Abrunden der scharfkantigen Körner des keramischen Materials.

In einer vorteilhaften Variante liegt der Mittenrauwert Ra im Kontaktbereich des Aufbauteils zwischen 0.02 und 0.04 Mikrometer.

Der arithmetische Mittenrauwert Ra ist durch DIN EN ISO 4287:2010 normiert.

Die Oberfläche des Aufbauteils im Kontaktbereich kann beschichtet sein, beispielsweise metalldampfbeschichtet oder plasmabeschichtet.

Die Oberfläche des Aufbauteils im Kontaktbereich kann auch glasiert sein. Eine Glasur kann durch Auftrag einer oder mehrerer Glasurschichten auf das Keramikteil mit anschliessendem Aufschmelzen erreicht werden. Eine andere Möglichkeit ist das Aufbringen einer Substanz oder eines Substanzgemisches, beispielsweise eines Salzes, auf die Oberfläche des Keramikteils, welche den Schmelzpunkt des Keramikmaterials lokal unter die Sintertemperatur senkt, so dass eine entsprechende Glasschicht entsteht. Das Aufbringen einer solchen Substanz kann auch über die Gasphase erfolgen.

Aufgrund der glatteren Oberfläche des Aufbauteils im Kontaktbereich ist der Abrieb der im Kontaktbereich aufliegenden Oberfläche des Basiskörpers geringer.

Vorteilhaft weist ein erfindungsgemässes Aufbauteil im Kontaktbereich keine Kanten auf.

Vorteilhaft ist bei einem erfindungsgemässen Aufbauteil im Kontaktbereich die Oberfläche des Aufbauteils stetig und/oder abgerundet.

Vorteilhaft weist bei einem erfindungsgemässen Aufbauteil die Oberfläche des Aufbauteils im Kontaktbereich eine geometrische Stetigkeit G1 auf (tangentiale Stetigkeit).

Eine G1 Stetigkeit der Oberflächen im Kontaktbereich bedeutet insbesondere, dass auf keiner der Oberflächen im Kontaktbereich Kanten (Stetigkeit G0) vorhanden sind, welche bei einer, auch kleinen, relativen Verschiebung der Elemente bzw. Bauteile eines modularen Dentalimplantats zueinander in der gegenüber liegenden Oberfläche einhaken und Material abscheren können, bzw. selbst besonders leicht abgeschert werden können.

Besonders vorteilhaft weist bei einem erfindungsgemässen Aufbauteil die Oberfläche des Aufbauteils im Kontaktbereich eine geometrische Stetigkeit G2 auf (Krümmungsstetigkeit).

Eine solche G2-Stetigkeit der Oberflächen im Kontaktbereich hat den Vorteil, dass bei einer kleinen relativen Verschiebung der Elemente bzw. Bauteile eines modularen Dentalimplantats zueinander der Anpressdruck näherungsweise konstant bleibt. Die gleichmässig wirkenden Kräfte führen zu einer verminderten asymmetrisch wirkenden mechanischen Kraftwirkung und damit ebenfalls zu einer Reduktion des mechanisch verursachten Materialabtrags an der Oberfläche.

In einer vorteilhaften Ausführungsform eines erfindungsgemässen Aufbauteils ist die Oberfläche des Aufbauteils im Kontaktbereich poliert.

Im nachfolgend diskutierten erfindungsgemässen Verfahren wird auf das Polieren des Aufbauteils näher eingegangen.

Vorteilhaft ist ein erfindungsgemässes Aufbauteil mittels Pulverspritzguss-Verfahren hergestellt.

Das Pulverspritzgiessen eines solchen keramischen Bauteils bzw. Elements führt wegen der vorteilhaft sehr glatten Oberfläche der Spritzgussform zu einer wesentlich glatteren Oberfläche des darin mittels Pulverspritzguss hergestellten Keramikteils als dies mit nachträglichen subtraktiven Bearbeitungsverfahren, insbesondere zerspanenden Verfahren wie Fräsen, Schleifen oder Bohren möglich ist. Diese Urformung des Keramikteils ohne mechanische Materialabtragung vermeidet so die entsprechenden Bearbeitungsspuren, welche ansonsten den Mittenrauwert Ra erhöhen. Zusätzlich können subtraktive Bearbeitungsverfahren die Materialstruktur des Keramikbauteils belasten und so zu Beschädigungen in der Materialstruktur wie beispielsweise Spannungen oder Risse führen. Durch solche Beschädigungen kann die Festigkeit des Keramikteils reduziert werden. Bei Keramikpulverspritzguss besteht diese Gefahr der Beschädigung nicht oder ist deutlich geringer.

Auch vorteilhafte Freiformen an den Elementen bzw. Bauteilen eines modularen Dentalimplantats sind mittels Pulverspritzgiessen wesentlich einfacher herzustellen als mit den vorgenannten subtraktiven Bearbeitungsverfahren.

In einer weiteren vorteilhaften Ausführungsform eines erfindungsgemässen Dentalimplantats weist das Aufbauteil einen Vorsprung auf, der im zusammengebauten Zustand des Dentalimplantats in eine Ausnehmung des Basiskörpers eingesteckt ist.

Ein zweiter Aspekt der Erfindung betrifft ein Verfahren zur Herstellung eines Aufbauteil für ein modulares Dentalimplantat, wobei das modulare Dentalimplantat umfasst: einen in einem Kieferknochen verankerbaren Basiskörper, der aus einem für Implantate geeigneten metallischen Werkstoff gefertigt ist, und ein Aufbauteil, das dazu vorgesehen ist, mit dem Basiskörper des modularen Dentalimplantats verbunden zu werden.

Ein solches erfindungsgemässes Verfahren umfasst die Schritte:
- Bereitstellen eines gesinterten keramischen Aufbauteils, beispielsweise aus Zirkonoxid;
- Behandlung einer Oberfläche des keramischen Aufbauteiles zumindest in einem Kontaktbereich des Aufbauteils, in welchem sich in einem zusammengebauten Zustand des modularen Dentalimplantats das Aufbauteil und der Basiskörper des modularen Dentalimplantats berühren, beziehungsweise in welchem der Basiskörper des modularen Dentalimplantats und das Aufbauteil aneinander liegend angeordnet sind;

die Oberfläche in dem genannten Kontaktbereich des Aufbauteils wird derart bearbeitet, dass die Oberfläche einen Mittenrauwert Ra aufweist, welcher im operativen Betrieb des modularen Dentalimplantats eine Beschädigung der Oberfläche des Basiskörpers des modularen Dentalimplantats durch das Aufbauteil, insbesondere einen zerspanenden Materialabtrag, verhindert; und
die Oberfläche des Aufbauteils im Kontaktbereich wird derart bearbeitet, dass die Oberfläche einen Mittenrauwert Ra ≤ 0.08 Mikrometer, vorteilhaft ≤ 0.04 Mikrometer, und besonders vorteilhaft ≤ 0.02 Mikrometer aufweist.

In einer vorteilhaften Variante liegt der Mittenrauwert Ra zwischen 0.02 und 0.04 Mikrometer.

Eine Reduktion des Mittenrauwerts kann erreicht werden durch Abrunden, Glätten, Strahlen oder Polieren der scharfkantigen Keramikoberfläche
In einer vorteilhaften Ausführungsvariante des Verfahrens wird die Oberfläche des Aufbauteils im Kontaktbereich poliert.

Vorteilhaft erfolgt dabei das Polieren im Kontaktbereich durch Gleitschleifen, Bürsten oder Läppen.

Gleitschleifen ist ein mechanisch-chemisches Verfahren zum Entgraten, Verrunden, Glätten oder Polieren von Einzelteilen und Serienteilen. Bei einem solchen Gleitschleifprozess werden durch Vibration und Umwälzbewegungen die losen Werkstücke in eine Relativbewegung zu den Schleifkörpern bzw. Polierkörpern gebracht, wodurch eine Oberflächenglättung entsteht. Durch Gleitschleifen können somit die Aufbauteile, welche aus einem keramischen Werkstoff bestehen, geschliffen und poliert werden.

Der Gleitschleifprozess kann beispielsweise in einem Rundvibrator erfolgen. Rundvibrator-Vorrichtungen werden von verschiedenen Herstellern wie beispielsweise RÖSLER Oberflächentechnik GmbH oder Walther Trowal GmbH & Co. KG angeboten. Die genannten Herstellerfirmen liefern ebenfalls die für den Betrieb dieser Vorrichtungen notwendigen Verbrauchsmaterialien wie Schleifkörper, Compounds und Additive.

Beispielsweise kann durch einen lange andauernden Gleitschleifprozess von mindestens 48-72 Stunden an der Oberfläche des Keramikteiles ein erfindungsgemässer Mittenrauwert Ra erreicht werden. Ein solcher Mittenrauwert verhindert im operativen Betrieb des Dentalimplantats eine Beschädigung der Oberfläche des Basiskörpers durch das Aufbauteil in dem genannten Kontaktbereich, insbesondere einen zerspanenden Materialabtrag.

Zum Erreichen des entsprechenden Mittenrauwerts werden im Gleitschleifprozess Schleifkörper zu den zu bearbeitenden Werkstücken, hier den Aufbaueilen, zugegeben. Vorzugsweise ist die Form der Schleifkörper auf die Geometrie der Oberfläche der Werkstücke abgestimmt. Dabei ist darauf zu achten, dass alle wesentlichen Konturen erreicht werden und keine Verklemmungen zwischen den Schleifkörpern beziehungsweise Schleifkörpern und Werkstücken entstehen können. Die Schleifkörper können flache, runde oder spitze Formen aufweisen. Durch spitze Formen können die Schleifkörper auch kantige Oberflächen der Werkstücke polieren. Durch flache oder runde Formen kann vermieden werden, dass kantige Bereiche der Oberfläche der Werkstücke poliert werden.

Vorteilhaft sind zum Gleitschleifen die Poliersteine derart geformt, dass sie geeignet sind, die zu polierenden Flächen gut zu ergreifen.

Die Schleifkörper beeinflussen durch ihre Form das Schleifverhalten. Gewölbte, runde Formen arbeiten weniger aggressiv als kantige Schleifkörpergeometrien. Grundsätzlich kann gesagt werden, dass je grösser und schwerer der Schleifkörper, desto intensiver und grösser ist die Schleifleistung und desto gröber und rauer ist das Schliffbild.

Die Schleifkörper zum Gleitschleifen der Oberfläche des Aufbauteils im Kontaktbereich können aus Keramik wie beispielsweise Aluminiumoxid gefertigt sein. Vorzugsweise weist die Keramik der Schleifkörper eine höhere Härte auf als die zu polierenden Aufbauteile. Es können aber auch Schleifkörper aus Kunststoff, Stein oder aus Metall wie beispielsweise Messing oder Edelstahl für den Gleitschleifprozess verwendet werden.

Der Grössenunterschied zwischen den keramischen Aufbauteilen und den Schleifkörpern wird vorteilhaft so gewählt, dass nach dem Gleitschleifprozess ein einfaches Separieren von Werkstücken und Schleifkörpern nach Grösse ermöglicht wird.

Vorteilhaft wird in eine solchen erfindungsgemässen Verfahren beim Polieren zusätzlich ein Poliermittel verwendet werden, dem optional ein Schleifpulver zugegeben wird.

Das Poliermittel, auch Compound oder Behandlungsmittel genannt, kann aus einer seifigen oder öligen Flüssigkeit bestehen. Durch das Poliermittel wird die Oberfläche von Schleifkörpern und Werkstücken sauber gehalten und der Gleitschleifprozess auf konstanter Qualität gehalten. Wird dem Poliermittel zusätzlich Schleifpulver zugegeben, so wird dieses durch das Poliermittel gleichmässig auf den Schleifkörpern verteilt, wodurch der Polierprozess optimiert wird.

Als Schleifpulver, welches dem Gleitschleifprozess zusätzlich beigemischt werden kann, eignet sich beispielsweise Diamantpulver oder Keramikpulver. Das Keramikpulver kann beispielsweise aus Aluminiumsulfid, Siliciumnitrid, Zirconiumoxid, Borcarbid oder Bornitrid bestehen. Das Schleifpulver kann auch in den Schleifkörpern enthalten sein. Es können auch verschiedene Schleifpulver gemischt werden.

Das Poliermittel/Compound wir ausgewählt nach dem zu bearbeitenden Werkstoff, sowie dem angestrebtem Bearbeitungsziel. Ein mögliches Compound für den Gleitschleifprozess für die offenbarten vorteilhaften Aufbauteile ist ARF-S oder M10 von Walther Trowal oder IMR4 von RÖSLER. Die Inhaltsstoffe der Compounds werden von den Herstellern nicht publiziert. Meist werden flüssige Compounds eingesetzt, da sie die Anforderungen an moderne Dosiersysteme am besten erfüllen. Aber auch durch pulverförmige oder pastenförmige Compounds kann die Gleitschleifbearbeitung im Einzelfall ergänzt werden.

Es können auch Additive zugeführt werden, welche die Schleifleistung zusätzlich verstärken. Die Zugabe der Additive erfolgt chargenweise mit ca. 0.5-1.0 kg pro 100 kg Schleifkörper.

In einem erfindungsgemässen Verfahren wird das keramische Aufbauteil vorteilhaft mittels Pulverspritzgussverfahren hergestellt.

Das Pulverspritzgiessen eines keramischen Bauteils oder Elements führt wegen der sehr glatten Oberfläche der Spritzgussform zu einer wesentlich glatteren Oberfläche des darin mittels Pulverspritzguss hergestellten Keramikteils als dies mit subtraktiven Bearbeitungsverfahren, insbesondere zerspanenden Verfahren wie Fräsen oder Bohren möglich ist. Zusätzlich können subtraktive Bearbeitungsverfahren die Materialstruktur des Keramikbauteils belasten und so zu Beschädigungen in der Materialstruktur wie beispielsweise Spannungen oder Risse führen. Durch solche Beschädigungen kann die Festigkeit des Keramikteils reduziert werden. Bei Keramikpulverspritzguss besteht diese Gefahr der Beschädigung nicht oder ist deutlich geringer.

Auch vorteilhafte Freiformen an den Bauteilen sind wesentlich einfacher herzustellen als mit den vorgenannten subtraktiven Bearbeitungsverfahren.

Ein Aspekt der Beschreibung betrifft einen Basiskörper für ein modulares Dentalimplantat.

Ein Basiskörper für ein modulares Dentalimplantat ist dazu vorgesehenen, in einem Kieferknochen verankert und mit einem Aufbauteil eines Dentalimplantats verbunden zu werden. Der Basiskörper ist aus einem für Dentalimplantate geeigneten metallischen Werkstoff gefertigt. Die Oberfläche des Basiskörpers ist dafür vorgesehen, in einem zusammengebauten Zustand des modularen Dentalimplantates in einem Kontaktbereich des Basiskörpers eine Oberfläche des Aufbauteils des Dentalimplantats in einem Kontaktbereichs des Aufbauteils zu berühren, beziehungsweise auf der Oberfläche in dem Kontaktbereich des Aufbauteils aufzuliegen.

Vorteilhaft ist bei einem solchen Basiskörper im Kontaktbereich die Oberfläche des Basiskörpers stetig und/oder abgerundet.

Alternativ oder zusätzlich weist ein solcher Basiskörper im Kontaktbereich keine Kanten auf.

Vorteilhaft weist bei einem Basiskörper die Oberfläche des Basiskörpers im Kontaktbereich eine geometrische Stetigkeit G1 auf (tangentiale Stetigkeit). Besonders vorteilhaft weist die Oberfläche des Basiskörpers im Kontaktbereich eine geometrische Stetigkeit G2 auf (Krümmungsstetigkeit). Es wird auf die entsprechenden Ausführungen im Zusammenhang mit dem Aufbauteil verweisen.

Vorteilhaft ist die Oberfläche eines Basiskörpers in dem genannten Kontaktbereich beschichtet, beispielsweise plasmabeschichtet oder emailliert, und/oder gehärtet oder anodiert.

Eine gehärtete Oberfläche des Metalls des Basiskörpers führt zu geringerem Abrieb am Metallteil aufgrund des Kontakts mit dem härteren keramischen Aufbauteils im Kontaktbereich. Die Art der Beschichtung bzw. Härtung ist vorteilhaft so gewählt, dass die resultierende Härte der Oberfläche des Basiskörpers im Kontaktbereich ähnlich ist wie die Härte der Oberfläche eines Aufbauteils im Kontaktbereich. Dies hat zur Folge, dass der Abrieb des metallischen Basiskörpers minimiert wird.

Eine Email-Beschichtung des Basiskörpers im Kontaktbereich führt zu einer Glattheit der Oberfläche, welche hervorstehenden Strukturen an der aufliegenden Oberfläche eines Aufbauteils im Kontaktbereichs keine Möglichkeit gibt, einzuhaken und so Material abzuscheren.

Vorteilhaft besteht ein solcher Basiskörper aus Titan beziehungsweise aus einer Titanlegierung.

In einer weiteren Ausführungsform kann der Basiskörper aus keramischem Material bestehen. Die Ausführungen zur Oberfläche im Kontaktbereich des Aufbauteils gelten in einer solchen Ausführungsvariante auch für die Oberfläche im Kontaktbereich des Basiskörpers.

Ein dritter Aspekt der Erfindung betrifft ein modulares Dentalimplantat.

Ein erfindungsgemässes modulares Dentalimplantat weist einen in einem Kieferknochen verankerbaren Basiskörper auf, sowie einen mit dem Basiskörper verbindbaren erfindungsgemässen Aufbauteil.

Die Oberfläche des Aufbauteils ist im Kontaktbereich derart bearbeitet, dass sie in Abhängigkeit der Härte des metallischen Werkstoffes des Basiskörpers und der Härte des keramischen Werkstoffes des Aufbauteils einen Mittenrauwert Ra aufweist, welcher im operativen Betrieb des Dentalimplantats eine Beschädigung der Oberfläche des Basiskörpers in dem genannten Kontaktbereich durch das Aufbauteil, insbesondere einen zerspanenden Materialabtrag, verhindert bzw. weitgehendst ausschliesst.

Eine grosse Kontaktfläche zwischen Basiskörper und Aufbauteil ist vorteilhaft, denn sie führt zu einer höheren Haftreibung zwischen den beiden Elementen und gleichzeitig zu einer geringeren Flächenpressung. Dies führt zu einer grösseren Stabilität des zusammengebauten Dentalimplantats. Eine grosse Kontaktfläche führt zudem bei gleicher wirkender Kraft zu einem kleineren Anpressdruck. Damit kommt es bei den während der Benutzung des Dentalimplantats auftretenden Relativbewegungen des Basiskörpers und Aufbauteils zu geringeren Scherkräften, was ebenfalls den unerwünschten mechanischen Materialabtrag reduziert. Die Kontaktfläche zwischen Basiskörper und Aufbauteil sollte jedoch auch nicht zu gross sein, da eine kleinere Kontaktfläche bei gleich wirkender Kraft zu einem höheren Anpressdruck führt. Durch einen höheren Anpressdruck wird eine bakteriendichte Abgrenzung zwischen der Mundhöhle des Patienten und einem Innenraum des Implantates erreicht. Der Anpressdruck sollte deshalb mindestens so gross sein, dass eine bakteriendichte Abdichtung sichergestellt ist.

Erfindungsgemässe Dentalimplantate ermöglichen es, zwei vorteilhaften Materialien, also den metallischen Werkstoff, insbesondere Titan, und das keramische Material, insbesondere Zirkonoxid, in Kombination für das Dentalimplantat zu nutzen, ohne dass bei direktem Kontakt die aus dem Stand der Technik bekannten Probleme auftreten. Durch die erfindungsgemässe titanfreundliche Ausgestaltung der Keramikoberfläche im Kontaktbereich des Aufbauteils zerfrisst das wesentlich härtere keramische Material nicht die Metalloberfläche im Kontaktbereich des Basiskörpers.

Vorteilhaft ist in einem erfindungsgemässen Dentalimplantat im Kontaktbereich zwischen Aufbauteil und Basiskörper die Oberfläche des härteren Bauteils bzw. Elements abgerundet.

In einer vorteilhaften Ausführungsform eines erfindungsgemässen Dentalimplantats weist das Aufbauteil einen Vorsprung auf, der im zusammengebauten Zustand des Dentalimplantats in eine Ausnehmung des Basiskörpers eingesteckt ist.

Der Basiskörper und/oder das Aufbauteil eines erfindungsgemässen Dentalimplantats bestehen vorteilhaft aus zwei oder mehr Elementen bzw. Bauteilen.

Vorteilhaft besteht im zusammengebauten Zustand eines erfindungsgemässen Dentalimplantats zwischen dem Basiskörper und dem Aufbauteil ein verdrehsicherer Formschluss.

In einer vorteilhaften Ausführungsform eines erfindungsgemässen Dentalimplantats sind der Basiskörper und das Aufbauteil im zusammengebauten Zustand des Dentalimplantats mit einer Verbindungsschraube verbunden.

Weitere Aspekte der vorliegenden Erfindung ergeben sich auch aus der nachfolgenden Beschreibung.

### Kurze Beschreibung der Zeichnungen

Im Folgenden wird das erfindungsgemässe Dentalimplantat anhand von Zeichnungen erläutert.
Figur 1 zeigt schematisch einen Längsschnitt durch eine mögliche Ausführungsform eines erfindungsgemässen Dentalimplantats.
Figur 2 zeigt schematisch eine Detailansicht aus dem Längsschnitt der Figur 1, in welchem der Kontaktbereich zwischen Basiskörper und Aufbauteil gezeigt ist.
Figur 3 zeigt schematisch einen Längsschnitt das Dentalimplantat aus Figur 1 in Explosionsdarstellung.

### Wege zur Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken.

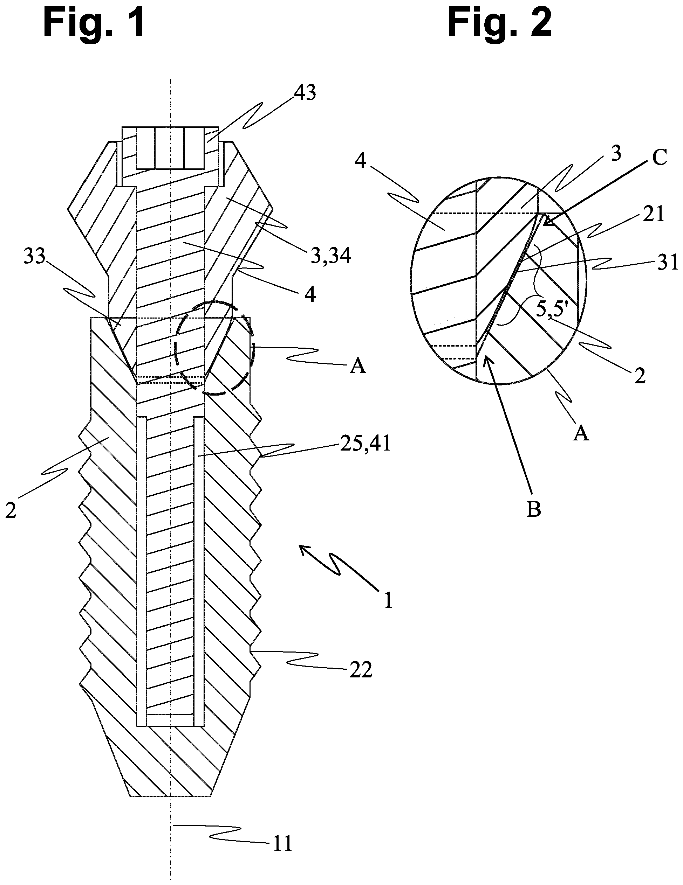

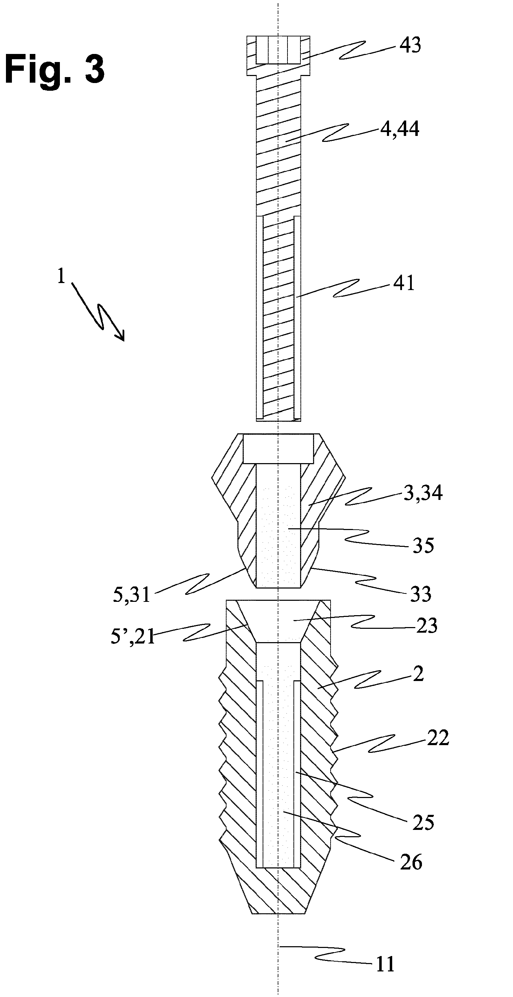

Ein vorteilhaftes Ausführungsbeispiel eines erfindungsgemässen Dentalimplantats 1 ist in den Figuren 1, 2 und 3 dargestellt. Das Dentalimplantat 1 besteht aus einem metallischen Basiskörper 2 und einem keramischen Aufbauteil 3, welche durch eine Verbindungsschraube 4 entlang der Längsachse 11 wirkverbunden sind.

Der Basiskörper 2, welches dazu vorgesehen ist, dauerhaft in einem Kieferknochen befestigt zu werden, weist ein Aussengewinde 22 auf, mit welchem der Basiskörper 2 bei der Implantation in ein zuvor gebohrtes Sackloch im Kieferknochen eingeschraubt werden kann. Je nachdem, ob in dieses Sackloch zuvor ein Gewinde geschnitten worden ist oder nicht, kann das Aussengewinde 22 des Basiskörpers 2 geeignet gewählt werden. Beispielsweise kann das Aussengewinde als Schneidegewinde ausgestaltet sein, so dass kein separates Innengewinde in der Bohrung im Kieferknochen angebracht werden muss.

Gefluchtet zur Längsachse 11 ist im Basiskörper 2 ein zum koronalen Längsende hin offenes, im wesentlichen zylindrisches Sackloch 26 angeordnet, mit einem Innengewinde 25, welches dafür vorgesehen ist, im zusammengebauten Zustand des Dentalimplantats 1 mit einem Aussengewinde 41 einer Verbindungsschraube 4 zu wechselwirken.

Das Sackloch 26 des Basiskörpers 2 weitet sich gegen aussen hin zu einer im Wesentlichen als Hohlkegel geformten konkaven Ausnehmung 23. Auf der konischen Mantelfläche der Ausnehmung 23 liegt im zusammengebauten Zustand des Dentalimplantats 1 die konische Mantelfläche des kegelförmigen apikale Vorsprungs 33 des keramischen Aufbauteils 3 auf.

Die konische Formgebung von Ausnehmung 23 und Vorsprung 33 hat den Vorteil, dass beim Zusammenbau des Dentalimplantats 1 eine Selbstzentrierung von Basiskörper und Aufbauteil 3 entlang der Längsachse 11 erfolgt. Gleichzeitig wird sowohl in Längsrichtung 11 als auch quer dazu das Spiel zwischen Basiskörper und Aufbauteil minimiert. Dies ist mit Blick auf die Vermeidung von Abrieb vorteilhaft.

Das Aufbauteil 3 umfasst einen Körper 34 mit durchgehendem Loch 35. Am apikalen Ende des Aufbauteils ist ein im Wesentlichen konisch geformter Vorsprung 33 angeordnet, welcher im zusammengebauten Zustand des Dentalimplantats 1 bündig in der konischen Ausnehmung 23 des Basiskörpers liegt. Am koronalen Ende des Aufbauteils ist eine Vertiefung angeordnet, in welcher der Schraubenkopf 43 der Verbindungsschraube 4 aufliegt.

Die im normalen operativen Betrieb des Dentalimplantats 1 in Kontakt kommenden Oberflächen 21, 31 der konischen Mantelflächen von Ausnehmung 23 und Vorsprung 33 definieren den Kontaktbereich 5 bzw. 5'. Ausnehmung 23 und Vorsprung 33 sind dabei so gestaltet, dass die Kontaktfläche möglichst grossflächig und im Wesentlichen konisch ist.

Eine grosse Kontaktfläche führt zu einer höheren formgebundenen Positionierung und damit zu einer grösseren Stabilität des zusammengebauten Implantats. Ferner führt eine grosse Kontaktfläche zu einer höheren Haftreibung und damit ebenfalls zu einer grösseren Stabilität des zusammengebauten Implantats. Zugleich führt eine grosse Kontaktfläche zu einem relativ gesehen geringeren Anpressdruck, und damit zu geringeren Reibkräften, und damit zu weniger unerwünschtem mechanischen Materialabtrag.

Die Kontaktfläche sollte jedoch auch nicht zu gross gewählt werden, denn durch eine kleine Kontaktfläche entsteht bei gleich wirkender Kraft ein höherer Anpressdruck. Durch den höheren Anpressdruck wird eine gute bakteriendichte Abgrenzung zwischen der Mundhöhle des Patienten und einem Innenraum des Implantates erreicht. Die Kontaktfläche ist also vorteilhaft ausreichend klein, dass der resultierende Anpressdruck eine bakteriendichte Abdichtung sicherstellt.

Gleichzeitig sind im gezeigten Ausführungsbeispiel die Ausnehmung 23 und der Vorsprung 33, und insbesondere deren Oberflächen in den Kontaktbereichen 5, 5', so ausgestaltet, dass die Oberfläche stetig ist, also keine Kanten und Sprünge aufweist. Solche Kanten und Sprünge sind problematisch bezüglich dem mechanischen Abrieb. Kanten am härteren keramischen Aufbauteil können bei einer Relativbewegung der aufeinanderliegenden Oberflächen in das weichere metallische Material des Basiskörpers eindringen und Material abscheren. Umgekehrt können Kanten am weicheren Basiskörper leichter durch das keramische Material abgeschert werden. Stetige Oberflächen minimieren diese Quelle von mechanischem Materialabtrag.

Im gezeigten Beispiel ist die Ausnehmung 23 des Basiskörpers 2 konisch geformt. Bei dem Vorsprung 33 des Aufbauteils 3 ist der Kontaktbereich 5 ebenfalls konisch geformt, passend zur Form der Ausnehmung 23. Am apikalen Ende des Vorsprungs 33 hingegen sinkt in einem Randbereich der Kontaktfläche 5 die Steigung der Kegelmantelfläche in Bezug auf die Längsachse 11, so dass zwischen der Oberfläche 5' der Ausnehmung 23 und der Oberfläche 5 des Vorsprungs 33 gegen die Längsachse 11 hin eine stetig grösser werdende Lücke entsteht (vgl. Pfeil B in Figur 2). Analog nimmt am koronalen Ende des Vorsprungs 33 in einem Randbereich der Kontaktfläche die die Steigung der Kegelmantelfläche in Bezug auf die Längsachse 11 zu, so dass ebenfalls eine stetig grösser werdende Lücke entsteht (vgl. Pfeil C in Figur 2). Als Folge dieser Ausgestaltung des Kontaktbereichs 5, 5' gibt es keine Kanten am Ende des Kontaktbereichs 5, 5' von Ausnehmung 23 und Vorsprung 33, welche Material abschaben können oder welche abgeschert werden können.

In einer nicht dargestellten anderen Ausführungsvariante kann alternativ oder zusätzlich die Oberfläche der Ausnehmung 23 so ausgestaltet sein, dass gegen ein apikales Ende der Ausnehmung hin der Steigungswinkel der konischen Oberfläche der Ausnehmung 23 gegenüber der Längsachse 11 zunimmt, und gegen ein koronales Ende der Ausnehmung hin der Steigungswinkel der konischen Oberfläche der Ausnehmung 23 gegenüber der Längsachse 11 abnimmt, so dass ebenfalls an den Enden des Kontaktbereichs 5, 5' eine stetig anwachsende Lücke zwischen Ausnehmung 23 und Vorsprung 33 resultiert.

In den beiden vorgenannten Ausführungsbespielen weisen die Oberflächen von Basiskörper 2 und Aufbauteil 3 im Kontaktbereich 5', 5 mindestens eine geometrische Stetigkeit G1 auf. Besonders vorteilhaft ist die geometrische Stetigkeit G2, wie bei dem in den Figuren gezeigten Beispiel.

Zur form- und kraftschlüssigen Verbindung von Basiskörper 2 und Aufbauteil 3 des Dentalimplantats 1 dient eine Verbindungschraube 4. Die Verbindungsschraube 4 umfasst einen zylindrischen Bolzen 44 mit Aussengewinde 41 und einen Schraubenkopf 43. Im gezeigten Beispiel weist der Schraubenkopf eine konkave Vertiefung für einen Sechskantschlüssel auf, so dass die Schraube ein- und ausgedreht werden kann. Dem Fachmann sind auch andere Möglichkeiten bekannt, eine Schraube mit einem Schraubwerkzeug in Wirkverbindung zu bringen.

Die Verbindungsschraube 4 ist vorteilhaft aus Metall gefertigt, jedoch kann sie auch aus Keramik gefertigt sein. Keramische Schrauben sind jedoch wesentlich empfindlicher gegenüber Scherkräften.

Der Innendurchmesser des Durchgangslochs 35 des Aufbauteils 3 ist so gewählt, dass im zusammengebauten Zustand des Dentalimplantats 1 der gewindelose Abschnitt des Schraubenbolzens 44 bündig im Durchgangsloch 35 anliegt. Die Schraube 4 zieht den Basiskörper und das Aufbauteil mit einer gewissen Zugkraft zusammen, so dass der konische Vorsprung 33 des Aufbauteils 3 in die komplementäre konische Vertiefung 23 des Basiskörpers 2 gepresst wird. Es resultiert eine feste und kraftschlüssige Verbindung zwischen Basiskörper 2 und Aufbauteil 3, die gleichzeitig auch den Innenraum des Dentalimplantats bestehend aus Sackloch 26 und Durchgangsloch 35 in Bezug auf die Verbindung zwischen Basiskörper und Aufbauteil dichtend abschliesst.

Auf dem zusammengebauten modularen Dentalimplantat 1 wie in Figur 1 gezeigt kann dann auf dem Aufbauteil 3 eine Suprakonstruktion, beispielsweise eine keramische Zahnkrone, montiert werden, beispielsweise durch Verkleben. Vorteilhaft schliesst diese Suprakonstruktion das Aufbauteil 3 nach aussen hin dichtend ab, so dass die Verbindungsschraube 4 vollständig innerhalb des modularen Dentalimplantats 1 zu liegen kommt.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

### Bezugszeichenliste

- 1: Dentalimplantat
- 11: Längsachse
- 2: Basiskörper
- 21: Oberfläche des Basiskörpers im Kontaktbereich
- 22: Aussengewinde
- 23: Ausnehmung
- 25: Innengewinde
- 26: Sackloch
- 3: Aufbauteil
- 31: Oberfläche des Aufbauteils im Kontaktbereich
- 33: Vorsprung
- 34: Körper des Aufbauteils
- 35: Durchgangsloch
- 4: Verbindungsschraube
- 41: Aussengewinde
- 43: Schraubenkopf
- 44: Schraubenbolzen
- 5: Kontaktbereich des Aufbauteils
- 5': Kontaktbereich des Basiskörpers

## Patentansprüche

1. Aufbauteil (3) für ein modulares Dentalimplantat (1), wobei das modulare Dentalimplantat (1) umfasst:
- einen in einem Kieferknochen verankerbaren Basiskörper (2), der aus einem für Implantate geeigneten metallischen Werkstoff gefertigt ist; und
- das Aufbauteil (3), das dazu vorgesehen ist, mit dem Basiskörper (2) des modularen Dentalimplantats (1) verbindbar zu sein;
wobei das Aufbauteil (3) aus einem für Implantate (3) geeigneten keramischem Werkstoff gefertigt ist;
wobei die Oberfläche (31) in einem Kontaktbereich (5) des Aufbauteils (3) dafür vorgesehen ist, in einem zusammengebauten Zustand des modularen Dentalimplantates (1) eine Oberfläche (21) in einem Kontaktbereich (5') des Basiskörpers (2) zu berühren, beziehungsweise auf der Oberfläche (21) in dem Kontaktbereich (5') des Basiskörpers (2) aufzuliegen; und
wobei die Oberfläche (31) des Aufbauteils (3) in dem genannten Kontaktbereich (5) des Aufbauteils (3) derart bearbeitet ist, dass die Oberfläche (31) einen Mittenrauwert Ra aufweist, welcher im operativen Betrieb des modularen Dentalimplantats (1) eine Beschädigung der Oberfläche (21) des Basiskörpers (2) in dem genannten Kontaktbereich (5') des Basiskörpers (2) durch das Aufbauteil (3), insbesondere einen zerspanenden Materialabtrag, verhindert;
**dadurch gekennzeichnet, dass** im Kontaktbereich (5) der Mittenrauwert Ra der Oberfläche (31) des Aufbauteils (3) ≤ 0.08 Mikrometer ist, vorteilhaft ≤ 0.04 Mikrometer ist, und besonders vorteilhaft ≤ 0.02 Mikrometer ist.

2. Aufbauteil (3) nach Anspruch 1, wobei im Kontaktbereich (5) die Oberfläche (31) des Aufbauteils (3) stetig und/oder abgerundet ist.

3. Aufbauteil (3) nach einem der vorherigen Ansprüche, wobei im Kontaktbereich (5) die Oberfläche (31) des Aufbauteils (3) G1-Stetigkeit aufweist, und vorteilhaft G2-Stetigkeit.

4. Aufbauteil (3) nach einem der vorherigen Ansprüche, wobei die Oberfläche (31) des Aufbauteils (3) im Kontaktbereich (5) poliert ist.

5. Aufbauteil (3) nach einem der vorherigen Ansprüche, wobei das Aufbauteil (3) mittels Pulverspritzgussverfahren hergestellt ist.

6. Verfahren zur Herstellung eines Aufbauteils (3) für ein modulares Dentalimplantat (1) wobei das modulare Dentalimplantat (1) umfasst: einen in einem Kieferknochen verankerbaren Basiskörper (2), der aus einem für Implantate geeigneten metallischen Werkstoff gefertigt ist; und ein Aufbauteil (3), das dazu vorgesehen ist, mit dem Basiskörper (2) des modularen Dentalimplantats (1) verbunden zu werden;
das Verfahren umfassend die Schritte:
- Bereitstellen eines gesinterten keramischen Aufbauteils (3), beispielsweise aus Zirkonoxid;
- Behandlung einer Oberfläche (31) des keramischen Aufbauteiles (3) zumindest in einem Kontaktbereich (5) des Aufbauteils (3), in welchem sich in einem zusammengebauten Zustand des modularen Dentalimplantats (1) das Aufbauteil (3) und der Basiskörper (2) des modularen Dentalimplantats (1) berühren, beziehungsweise in welchem der Basiskörper (2) des modularen Dentalimplantats (1) und das Aufbauteil (3) aneinander liegend angeordnet sind;
wobei die Oberfläche (31) in dem genannten Kontaktbereich (5) des Aufbauteils (3) derart bearbeitet wird, dass die Oberfläche (31) einen Mittenrauwert Ra aufweist, welcher im operativen Betrieb des modularen Dentalimplantats (1) eine Beschädigung der Oberfläche (21) des Basiskörpers (2) des modularen Dentalimplantats (1) durch das Aufbauteil (3), insbesondere einen zerspanenden Materialabtrag, verhindert;
**dadurch gekennzeichnet, dass** die Oberfläche (31) des Aufbauteils (3) im Kontaktbereich (5) derart bearbeitet wird, dass die Oberfläche (31) einen Mittenrauwert Ra ≤ 0.08 Mikrometer, vorteilhaft ≤ 0.04 Mikrometer, und besonders vorteilhaft ≤ 0.02 Mikrometer aufweist.

7. Verfahren nach Anspruch 6, wobei die Oberfläche (31) des Aufbauteils (3) im Kontaktbereich (5) poliert wird.

8. Verfahren zur Herstellung eines Aufbauteils (3) nach Anspruch 7, wobei das Polieren im Kontaktbereich durch Gleitschleifen, Läppen oder Bürsten erfolgt.

9. Verfahren nach einem der Ansprüche 7 oder 8, wobei beim Polieren zusätzlich ein Poliermittel verwendet wird.

10. Verfahren nach Anspruch 9, wobei dem Poliermittel zusätzlich ein Schleifpulver zugegeben wird.

11. Verfahren nach einem der Ansprüche 7 bis 10, wobei zum Gleitschleifen Poliersteine aus Keramik, Stein, Kunststoff oder Metall verwendet werden.

12. Verfahren nach einem der Ansprüche 7 bis 11, wobei zum Gleitschleifen die Poliersteine derart geformt sind, dass sie geeignet sind, die zu polierenden Flächen gut zu ergreifen.

13. Verfahren nach einem der Ansprüche 6 bis 12, wobei das Aufbauteil (3) mittels Pulverspritzgussverfahren hergestellt wird.

14. Modulares Dentalimplantat (1),
mit einem Basiskörper (2), welcher dazu vorgesehenen ist, in einem Kieferknochen verankert und mit einem Aufbauteil (3) des Dentalimplantats (1) verbunden zu werden; wobei der Basiskörper (2) aus einem für Dentalimplantate geeigneten metallischen Werkstoff gefertigt ist; und wobei die Oberfläche (21) des Basiskörpers (2) dafür vorgesehen ist, in einem zusammengebauten Zustand des modularen Dentalimplantates (1) in einem Kontaktbereich (5') des Basiskörpers (2) eine Oberfläche (31) des Aufbauteils (3) des Dentalimplantats in einem Kontaktbereichs (5) des Aufbauteils (3) zu berühren, beziehungsweise auf der Oberfläche (31) in dem Kontaktbereich (5) des Aufbauteils (3) aufzuliegen, und
mit einem mit dem Basiskörper (2) verbindbaren Aufbauteil (3) nach einem der Ansprüche 1 bis 5.

## Claims

1. An abutment (3) for a modular dental implant (1), the modular dental implant (1) comprising:
- a main part (2), which can be anchored in a jawbone and is made of a metal material suitable for implants, and
- the abutment (3), which is intended to be connectable to the main part (2) of the modular dental implant (1);
wherein the abutment (3) is made of a ceramic material suitable for implants (3);
wherein the surface (31) is intended in a contact region (5) of the abutment (3) to contact a surface (21) in a contact region (5') of the main part (2), or to lie on the surface (21) in the contact region (5') of the main part (2), when the modular dental implant (1) is in an assembled state; and
wherein the surface (31) of the abutment (3) in the mentioned contact region (5) of the abutment (3) is machined such that the surface (31) has a roughness average Ra which, when the modular dental implant (1) is in operation, prevents damage, in particular the removal of material, by the abutment (3) to the surface (21) of the main part (2) in the mentioned contact region (5') of the main part (2),
**characterized in that** the roughness average Ra of the surface (31) of the abutment (3) in the contact region (5) is ≤ 0.08 micrometers, advantageously ≤ 0.04 micrometers, and is particularly advantageously ≤ 0.02 micrometers.

2. The abutment (3) according to claim 1, wherein the surface (31) of the abutment (3) is continuous and/or rounded in the contact region (5).

3. The abutment (3) according to any one of the preceding claims, wherein the surface (31) of the abutment (3) has G1 continuity in the contact region (5), and advantageously G2 continuity.

4. The abutment (3) according to any one of the preceding claims, wherein the surface (31) of the abutment (3) is polished in the contact region (5).

5. The abutment (3) according to any one of the preceding claims, wherein the abutment (3) is produced by means of powder injection molding methods.

6. A method for producing an abutment (3) for a modular dental implant (1), wherein the modular dental implant (1) comprises: a main part (2), which can be anchored in a jawbone and is made of a metal material suitable for implants, and an abutment (3), which is intended to be connected to the main part (2) of the modular dental implant (1);
the method comprising the steps of:
- providing a sintered ceramic abutment (3), for example comprising zirconium oxide;
- treating a surface (31) of the ceramic abutment (3) at least in a contact region (5) of the abutment (3) in which, when the modular dental implant (1) is in the assembled state, the abutment (3) and the main part (2) of the modular dental implant (1) contact, or in which the main part (2) of the modular dental implant (1) and the abutment (3) are arranged adjacent to each other;
wherein the surface (31) in the mentioned contact region (5) of the abutment (3) is machined such that the surface (31) has a roughness average Ra which, when the modular dental implant (1) is in operation, prevents damage, in particular the removal of material, by the abutment (3) to the surface (21) of the main part (2) of the modular dental implant (1),
**characterized in that** the surface (31) of the abutment (3) in the contact region (5) is machined such that the surface (31) has a roughness average Ra ≤ 0.08 micrometers, advantageously ≤ 0.04 micrometers, and particularly advantageously ≤ 0.02 micrometers.

7. The method according to claim 6, wherein the surface (31) of the abutment (3) is polished in the contact region (5).

8. The method for producing an abutment (3) according to claim 7, wherein the polishing in the contact region takes place by vibratory grinding, lapping or brushing.

9. The method according to claim 7 or 8, wherein a polishing agent is additionally used during polishing.

10. The method according to claim 9, wherein a grinding powder is additionally added to the polishing agent.

11. The method according to any one of claims 7 through 10, wherein polishing stones made of ceramic, stone, plastic or metal are used for vibratory grinding.

12. The method according to any one of claims 7 through 11, wherein the polishing stones are shaped such that they are suitable for gripping the surfaces to be polished well.

13. The method according to any one of claims 6 through 12, wherein the abutment (3) is produced by means of powder injection molding methods.

14. A modular dental implant (1),
having a main part (2), which is intended for the purpose of being anchored in a jawbone and being connected to an abutment (3) of a dental implant (1);
wherein the main part (2) is made of a metal material suitable for dental implants; and
wherein the surface (21) of the main part (2) is intended in a contact region (5') of the main part (2) to contact a surface (31) of the abutment (3) of the dental implant in a contact region (5) of the abutment (3), or to lie on the surface (31) in the contact region (5) of the abutment (3), when the modular dental implant (1) is in an assembled state, and
having an abutment (3) according to any one of claims 1 to 5 that can be connected to the main part (2).

## Revendications

1. Pilier (3) pour un implant dentaire modulaire (1), l'implant dentaire modulaire (1) comprenant :
- un corps de base (2) pouvant être ancré dans un os de la mâchoire, qui est fabriqué à partir d'un matériau métallique adapté aux implants ; et
- le pilier (3), qui est prévu pour être relié au corps de base (2) de l'implant dentaire modulaire (1) ;
le pilier (3) étant fabriqué dans un matériau céramique adapté aux implants (3);
la surface (31) dans une zone de contact (5) du pilier (3) étant prévue pour, dans un état assemblé de l'implant dentaire modulaire (1), soit toucher une surface (21) dans une zone de contact (5') du corps de base (2) ou de reposer sur la surface (21) dans la zone de contact (5') du corps de base (2) ; et
la surface (31) du pilier (3) étant traitée dans ladite zone de contact (5) du pilier (3) de telle sorte que la surface (31) présente une rugosité moyenne Ra qui, lors de l'utilisation de l'implant dentaire modulaire (1), empêche un endommagement de la surface (21) du corps de base (2) dans ladite zone de contact (5') du corps de base (2) par le pilier (3), en particulier un enlèvement de matière;
**caractérisé en ce que**, dans la zone de contact (5), la rugosité moyenne Ra de la surface (31) du pilier (3) est ≤ 0,08 micromètre, de préférence ≤ 0,04 micromètre, et de manière particulièrement préférable ≤ 0,02 micromètre.

2. Pilier (3) selon la revendication 1, dans lequel, dans la zone de contact (5), la surface (31) du pilier (3) est continue et/ou arrondie.

3. Pilier (3) selon l'une des revendications précédentes, dans lequel, dans la zone de contact (5), la surface (31) du pilier (3) présente une continuité G1 et, de manière avantageuse, une continuité G2.

4. Pilier (3) selon l'une des revendications précédentes, dans lequel la surface (31) du pilier (3) est polie dans la zone de contact (5).

5. Pilier (3) selon l'une des revendications précédentes, dans lequel le pilier (3) est fabriqué au moyen d'un procédé de moulage par injection de poudre.

6. Procédé de fabrication d'un pilier (3) pour un implant dentaire modulaire (1), l'implant dentaire modulaire (1) comprenant : un corps de base (2) pouvant être ancré dans un os de la mâchoire, qui est fabriqué à partir d'un matériau métallique adapté aux implants ; et un pilier (3) destiné à être relié au corps de base (2) de l'implant dentaire modulaire (1) ;
le procédé comprenant les étapes suivantes :
- fourniture d'un pilier (3) en céramique frittée, par exemple en oxyde de zirconium;
- traitement d'une surface (31) du pilier en céramique (3) au moins dans une zone de contact (5) du pilier (3), dans laquelle, à l'état assemblé de l'implant dentaire modulaire (1), le pilier (3) et le corps de base (2) de l'implant dentaire modulaire (1) se touchent, ou dans laquelle le corps de base (2) de l'implant dentaire modulaire (1) et le pilier (3) sont disposés l'un contre l'autre;
la surface (31) dans ladite zone de contact (5) du pilier (3) étant traitée de telle sorte que la surface (31) présente une rugosité moyenne Ra qui, lors de l'utilisation de l'implant dentaire modulaire (1) empêche un endommagement de la surface (21) du corps de base (2) de l'implant dentaire modulaire (1) par le pilier (3), en particulier un enlèvement de matière;
**caractérisé en ce que** la surface (31) du pilier (3) est traitée dans la zone de contact (5) de telle sorte que la surface (31) présente une rugosité moyenne Ra ≤ 0,08 micromètre, de préférence ≤ 0,04 micromètre, et de manière particulièrement préférable ≤ 0,02 micromètre.

7. Procédé selon la revendication 6, dans lequel la surface (31) du pilier (3) est polie dans la zone de contact (5).

8. Procédé de fabrication d'un pilier (3) selon la revendication 7, dans lequel le polissage dans la zone de contact est effectué par tribofinition, rodage ou brossage.

9. Procédé selon l'une des revendications 7 ou 8, dans lequel un agent de polissage est en outre utilisé lors du polissage.

10. Procédé selon la revendication 9, dans lequel une poudre abrasive est en outre ajoutée à l'agent de polissage.

11. Procédé selon l'une des revendications 7 à 10, dans lequel des pierres de polissage en céramique, en pierre, en plastique ou en métal sont utilisées pour la tribofinition.

12. Procédé selon l'une des revendications 7 à 11, dans lequel, pour la tribofinition, les pierres de polissage sont formées de manière à bien saisir les surfaces à polir.

13. Procédé selon l'une des revendications 6 à 12, dans lequel le pilier (3) est fabriqué au moyen d'un procédé de moulage par injection de poudre.

14. Implant dentaire modulaire (1),
comprenant un corps de base (2) qui est prévu pour être ancré dans un os de la mâchoire et relié à un pilier (3) de l'implant dentaire (1) ; le corps de base (2) étant fabriqué à partir d'un matériau métallique adapté aux implants dentaires; et la surface (21) du corps de base (2) étant prévue pour, dans un état assemblé de l'implant dentaire modulaire (1), toucher dans une zone de contact (5') du corps de base (2) une surface (31) du pilier (3) de l'implant dentaire dans une zone de contact (5) du pilier (3), ou de reposer sur la surface (31) dans la zone de contact (5) du pilier (3), et
avec un pilier (3) pouvant être relié au corps de base (2) selon l'une des revendications 1 à 5.
